# EUROPEAN PATENT SPECIFICATION

(11) **EP 0 945 397 B1**
(45) Date of publication and mention of the grant of the patent: **21.07.2004**
(21) Application number: 99830121.2
(22) Date of filing: 05.03.1999
(51) Int. Cl.: B66F 9/065, E02F 3/28

(54) **A vehicle with a lifting boom, having a power takeoff driven by a mechanical transmission**
Fahrzeug mit einem Ausleger wobei eine Zapfwelle durch ein mechanisches Getriebe angetrieben ist
Véhicule à flèche ayant une prise de force entraînée par une transmission mécanique

(30) Priority: 27.03.1998 IT TO980268
(43) Date of publication of application: 29.09.1999
(73) Proprietor: Merlo Project S.r.l., I-12020 S. Defendente di Cervasca (Cuneo) (IT)
(72) Inventor: Merlo, Amilcare, c/o Merlo Spa, 12020 Fraz. S. Defendente Cervasca (CN) (IT); Galfre', Renato, c/o Merlo Spa, 12020 Fraz. S. Defendente Cervasca (CN) (IT)
(74) Representative: Marchitelli, Mauro

(56) References cited:
- EP-A- 0 692 448
- GB-A- 2 032 586
- US-A- 4 121 680
- US-A- 5 687 809

## Description

The present invention relates to a vehicle with a lifting boom, of the type comprising a load-carrying frame having a front section and a rear section, a lifting boom articulated to the frame in the rear section and extending parallel to the longitudinal axis of the vehicle, a control and driving cab arranged on one side of the boom and an internal combustion engine arranged on the opposite side of the boom with respect to the control cab.

A vehicle of this type is known for example from EP-A-0375705 of the same applicant.

In the vehicle disclosed in this document, the engine is arranged with its own longitudinal axis parallel to the longitudinal axis of the vehicle. Applicant has already produced vehicles of this type provided with one or two centrally arranged power takeoffs (arranged for instance in the rear and/or front section of the vehicle). In the known solutions, the power takeoff is operated by a hydraulic motor supplied with a pressurised fluid coming from a hydraulic assembly associated with the internal combustion engine. However, in certain applications a hydraulic power takeoff is inadequate, in particular for the limited transmissible power.

In order to overcome this drawback, the present invention relates to a vehicle of the type mentioned above, characterized in that it comprises a power takeoff mechanically driven by the internal combustion engine, through a mechanical transmission including the rotor of a hydraulic assembly coaxial with the engine and a friction clutch placed downstream of the hydraulic assembly and in that it comprises a three-point hitch mounted in the rear section of the frame, the three-point hitch being provided with a lifting device.

Characteristics and advantages of the present invention will become clear in the course of the detailed description which follows, given purely by way of non-limiting example, in which:
- figure 1 is a lateral schematic view of a vehicle according to the present invention,
- figure 2 is schematic plan view showing the transmission associated with the power takeoff,
- figure 3 is a perspective view of the part indicated by the arrow III in figure 1,
- figure 4 is a front elevational view along the arrow IV of figure 2, and
- figure 5 is a cross-section taken along the line V-V of figure 4.

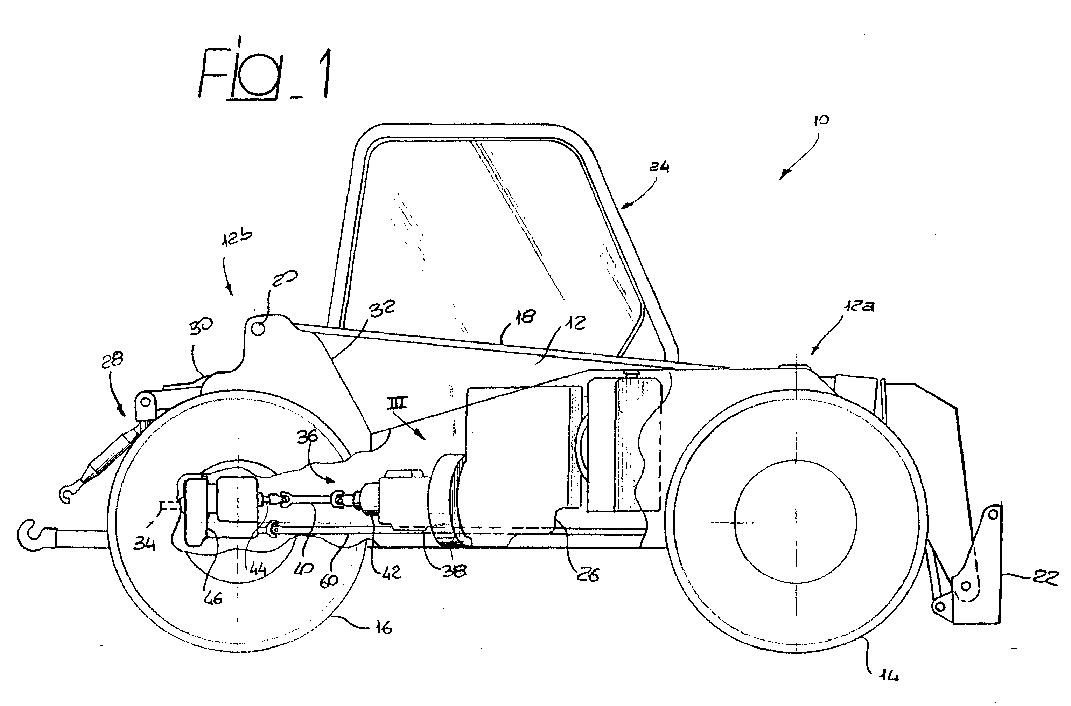

With reference to figure 1, 10 indicates a vehicle provided with a load-carrying frame 12 having a front section 12a and a rear section 12b. The frame 12 carries, in a way per se known, a front axle and a rear axle carrying respective front and rear wheels 14, 16 which in the example shown in the figure have all the same diameter and can all be both steering and driving wheels.

The frame 12 carries a lifting boom 18, preferably telescopic, which is articulated in the rear section 12b of the frame 12 about a transversal axis 20. The lifting boom 18 extends parallel to the longitudinal axis of the vehicle and is arranged in a central position. In figure 1 the boom 18 is shown in its completely lowered position. In a way per se known, the boom 18 is provided with a lifting cylinder (not shown) which controls rotations of the boom 18 about the articulation axis 20. The boom 18 is provided at its free end with an attachment device 22 to which implements of various type (not shown) such as a fork, a shovel or an aerial platform can be fixed.

The frame 12 carries a control and driving cab 24 arranged on one side of the lifting boom 18. On the other side of the boom 18 with respect to the control cab 24 is arranged an internal combustion engine 26 placed between the wheels 14, 16 of that side of the vehicle. The engine 26 is arranged with its own longitudinal axis inclined with respect to the longitudinal axis of the vehicle. In the embodiment shown in figure 1, the longitudinal axis of the engine 26 is directed towards the rear section 12b of the frame 12. As described in detail in a contemporary patent application of the same Applicant, a three-point hitch generically indicated by 28 is mounted in the rear section 12b of the frame 12, the three-point hitch being provided with a lifting device 30 mounted on a horizontal platform extending between two parallel lateral walls 32, only one of which is visible in figure 1. A power takeoff 34 placed in correspondence with the vehicle center line is arranged below said horizontal platform.

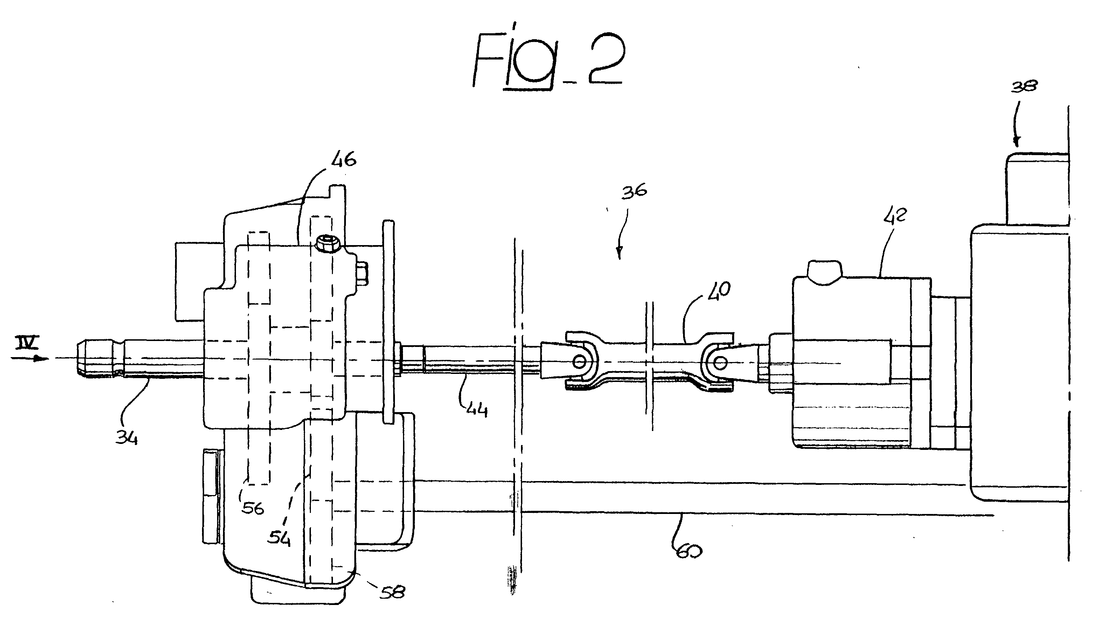

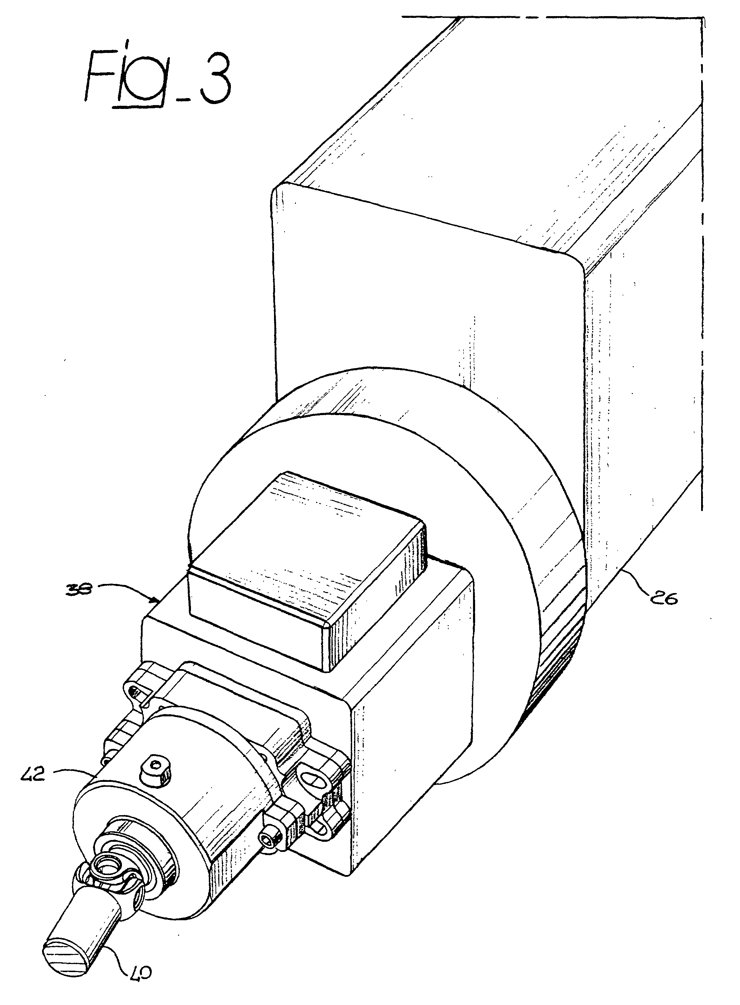

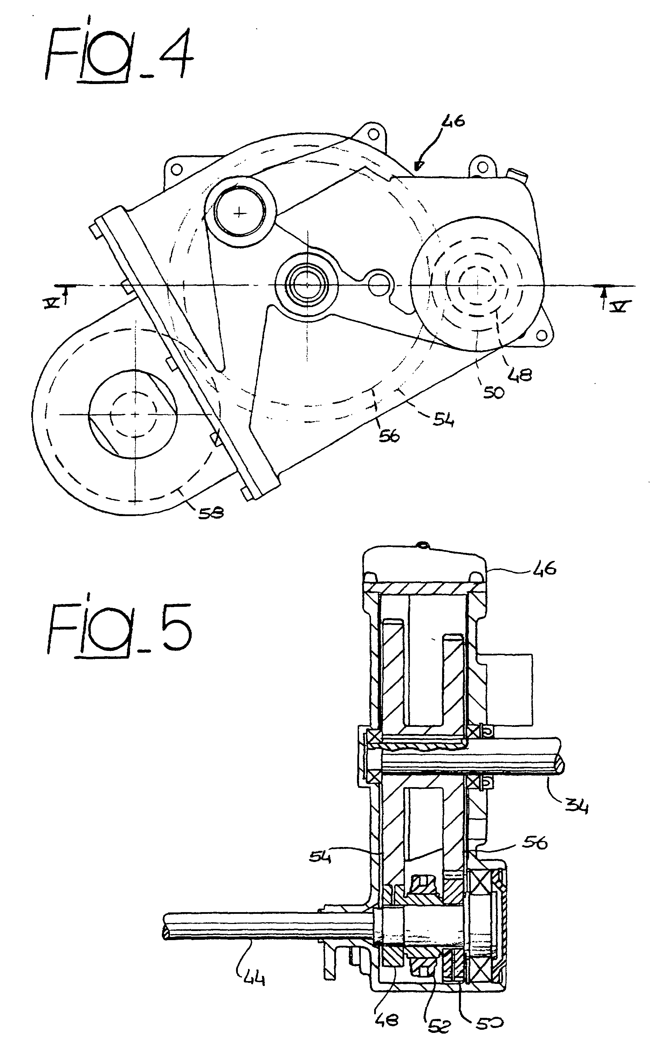

With reference to figures 1 to 3, the power takeoff 34 is directly driven by the engine 26 through a mechanical transmission 36. A hydraulic pump 38 of a commercial type, is mounted on the output section of the internal combustion engine 26 and its rotor is fixed to the output member of the engine 26. The outer housing of the pump 38 is fixed to the engine block 26. Hydraulic pipelines (not shown) supply pressurised fluid produced by the pump 38 to distributors and control valves of the various hydraulic devices of the vehicle, including a hydraulic motor which drives the driving wheels by means of a longitudinal transmission shaft connected to the front and rear axle shafts by means of respective differential gears (not shown). The rotor of the pump 38 is connected to a cardan shaft 40 through an oil bath multiple-disk friction clutch of a type per se known. The cardan shaft 40 is connected to an input shaft 44 of a reduction gear 46. With reference to figure 5, the reduction gear 46 comprises two gears 48, 50 which are free to rotate with respect to the input shaft 44 and cooperate with an engagement device 52 which can be manually operated by means of a control lever (not shown). The engagement device 52, in a way per se known, enables to selectively connect to the input shaft 44 either the gear 48 or the gear 50. The two gears 48, 50 constantly mesh with respective gears 54, 56 fixed to an output shaft forming the power takeoff 34. The reduction gear 46 can be provided with a further gear 58 (figures 2 and 4) meshing with one of the gears 54 or 56 fixed to the power takeoff 34. This gear 58 can be used for driving a front power takeoff (not shown) by means of a driving shaft 60, which is preferably a cardan shaft, fixed to the gear 58.

## Claims

1. A vehicle with a lifting boom, comprising:
- a load-carrying frame (12) having a front section (12a) and a rear section (12b) and having two axles each carrying a pair of wheels (14, 16),
- a lifting boom (18) articulated to the frame (12) in the rear section (12b) and extending parallel to the longitudinal axis of the vehicle,
- a control and driving cab (24) arranged on one side of said boom (18),
- an internal combustion engine (26) arranged on the opposite side of the boom (18) with respect to the control cab (24) and housed between the two wheels (14, 16) of that side,
**characterized in that** it comprises:
- a three-point hitch (28) mounted in the rear section (12b) of the frame (12), the three-point hitch being provided with a lifting device (30);
- a power takeoff (34) substantially centered on the longitudinal axis of the vehicle, said power takeoff (34) being mechanically driven by the internal combustion engine (26) through a mechanical transmission (36) including the rotor of a hydraulic assembly (38) fixed to the engine output shaft and a friction clutch (42) arranged downstream of the hydraulic assembly (38).

2. A vehicle according to claim 1, **characterized in that** the transmission further comprises a transmission shaft (40) extending between the power takeoff (34) and the friction clutch (42).

3. A vehicle according to claim 2, **characterized in that** the power takeoff (34) is carried by a reduction gear (46) having an input shaft (44) connected for rotation to said transmission shaft (40).

4. A vehicle according to claim 3, **characterized in that** said reduction gear (46) comprises a transmission gear (58) fixed to a second transmission shaft (60) driving a second power takeoff arranged on the opposite side of the vehicle with respect to the first power takeoff.

5. A vehicle according to claim 1, **characterized in that** said friction clutch is a hydraulically driven multiple-disc friction.

6. A vehicle according to any of the preceding claims, **characterized in that** the internal combustion engine (26) is arranged with its own longitudinal axis inclined with respect to the longitudinal axis of the vehicle.

## Patentansprüche

1. Ein Fahrzeug mit einem Hebeausleger, welches aufweist:
- einen lasttragenden Rahmen (12), welcher einen Frontabschnitt (12a) und einen Rückabschnitt (12b) aufweist und welcher zwei Achsen aufweist, von denen jede ein Paar Räder (14, 16) trägt,
- einen Hebeausleger (18), der am Rahmen (12) im hinteren Abschnitt (12b) angelenkt ist und der sich parallel entlang der Längsachse des Fahrzeugs erstreckt,
- eine Steuerungs- und Führerkabine (24), die auf einer Seite des Auslegers (18) angeordnet ist,
- einen Verbrennungsmotor (26), der auf der gegenüberliegenden Seite des Auslegers (18) mit Bezug auf die Steuerkabine (24) angeordnet ist und zwischen den zwei Rädern (14, 16) dieser Seite untergebracht ist,
**dadurch gekennzeichnet, dass** es aufweist:
- eine Dreipunktkupplung (28), die im hinteren Abschnitt (12b) des Rahmens (12) angebracht ist, wobei die Dreipunktkupplung mit einer Hebeeinrichtung (30) versehen ist;
- einen Kraftabtrieb (34), der im Wesentlichen auf der Längsachse des Fahrzeugs zentriert ist, wobei der Kraftabtrieb (34) mechanisch durch den Verbrennungsmotor (26) über ein mechanisches Getriebe (36) angetrieben wird, welches den Rotor einer hydraulischen Baugruppe (38) beinhaltet, der an der Motorausgangswelle befestigt ist und eine Reibkupplung (42), die stromabwärts der hydraulischen Baugruppe (38) angeordnet ist.

2. Fahrzeug nach Anspruch 1, **dadurch gekennzeichnet, dass** das Getriebe weiterhin eine Übertragungswelle (40) aufweist, die sich zwischen dem Kraftabtrieb (34) und der Reibkupplung (42) erstreckt.

3. Fahrzeug nach Anspruch 2, **dadurch gekennzeichnet, dass** der Kraftabtrieb (34) durch ein Reduktionsgetriebe (46) getragen wird, welches eine Eingangswelle (44) aufweist, welche zum Drehen mit der Übertragungswelle (40) verbunden ist.

4. Fahrzeug nach Anspruch 3, **dadurch gekennzeichnet, dass** das Reduktionsgetriebe (46) ein Übertragungszahnrad (58) aufweist, welches an einer zweiten Übertragungswelle (60) befestigt ist, die einen zweiten Kraftabtrieb antreibt, der auf der gegenüberliegenden Seite des Fahrzeugs angeordnet ist mit Bezug auf den ersten Kraftabtrieb.

5. Fahrzeug nach Anspruch 1, **dadurch gekennzeichnet, dass** die Reibkupplung eine hydraulisch angetriebene Mehrscheiben-Reibkupplung ist.

6. Fahrzeug nach irgendeinem der vorhergehenden Ansprüche, **dadurch gekennzeichnet, dass** der Verbrennungsmotor (26) mit seiner Längsachse geneigt in Bezug auf die Längsachse des Fahrzeugs angeordnet ist.

## Revendications

1. Véhicule comprenant une flèche de levage, comprenant :
- un châssis porteur (12) ayant une section avant (12a) et une section arrière (12b) et ayant deux essieux portant chacun une paire de roues (14, 16),
- une flèche de levage (18) articulée sur le châssis (12) dans la section arrière (12b) et s'étendant parallèlement à l'axe longitudinal du véhicule,
- une cabine de commande et de conduite (24) agencée sur un côté de ladite flèche (18),
- un moteur à combustion interne (26) agencé sur le côté opposé de la flèche (18) par rapport à la cabine de commande (24) et logé entre les deux roues (14, 16) de ce côté,
**caractérisé en ce qu'**il comprend :
- un attelage en trois points (28) monté dans la section arrière (12b) du châssis (12), l'attelage en trois points étant pourvu d'un dispositif de levage (30) ;
- une prise de force (34) sensiblement centrée sur l'axe longitudinal du véhicule, ladite prise de force (34) étant mécaniquement entraînée par le moteur à combustion interne (26) par l'intermédiaire d'une transmission mécanique (36) comprenant le rotor d'un ensemble hydraulique (38) fixé à l'arbre de sortie du moteur et un embrayage à friction (42) agencé en aval de l'ensemble hydraulique (38).

2. Véhicule selon la revendication 1, **caractérisé en ce que** la transmission comprend, de plus, un arbre de transmission (40) s'étendant entre la prise de force (34) et l'embrayage à friction (42).

3. Véhicule selon la revendication 2, **caractérisé en ce que** la prise de force (34) est portée par un engrenage réducteur (46) ayant un arbre d'entrée (44) connecté pour rotation audit arbre de transmission (40).

4. Véhicule selon la revendication 3, **caractérisé en ce que** ledit engrenage réducteur (46) comprend un engrenage de transmission (58) fixé à un second arbre de transmission (60) entraînant une seconde prise de force agencée sur le côté opposé du véhicule par rapport à la première prise de force.

5. Véhicule selon la revendication 1, **caractérisé en ce que** ledit embrayage à friction est un embrayage à friction multidisque à entraînement hydraulique.

6. Véhicule selon l'une quelconque des revendications précédentes, **caractérisé en ce que** le moteur à combustion interne (26) est agencé de telle manière que son propre axe longitudinal soit incliné par rapport à l'axe longitudinal du véhicule.
